# EUROPÄISCHE PATENTSCHRIFT

(11) **EP 3 375 997 B1**
(45) Veröffentlichungstag und Bekanntmachung des Hinweises auf die Patenterteilung: **02.10.2019**
(21) Anmeldenummer: 18160310.1
(22) Anmeldetag: 06.03.2018
(51) Int. Cl.: F01N 3/20

(54) **FLÜSSIGKEITSTANK MIT EINEM HEIZKÖRPER**
LIQUID TANK WITH A HEATING BODY
RÉSERVOIR DE LIQUIDE DOTÉ D'UN CORPS DE CHAUFFE

(30) Priorität: 14.03.2017 DE 102017105380
(43) Veröffentlichungstag der Anmeldung: 19.09.2018
(73) Patentinhaber: VERITAS AG, 63571 Gelnhausen (DE)
(72) Erfinder: RÖSCH, Thomas, 63589 Linsengericht (DE); MOH, Wilfried, 69242 Mühlhausen (DE)
(74) Vertreter: Patentship Patentanwaltsgesellschaft mbH

(56) Entgegenhaltungen:
- EP-A1- 2 711 224
- WO-A1-2011/085830
- WO-A1-2017/097808
- DE-A1-102010 042 985

## Beschreibung

Die vorliegende Erfindung betrifft einen Flüssigkeitstank mit einem Heizkörper in einem Kraftfahrzeug. Die vorliegende Erfindung betrifft insbesondere einen Harnstofftank zur Aufnahme einer wässrigen Harnstoff-Lösung mit einem Heizkörper in einem Kraftfahrzeug.

Um die Emission von Stickoxiden beim Betrieb von Verbrennungsmotoren, insbesondere Dieselmotoren, in einem Kraftfahrzeug zu reduzieren, wird das Verfahren der selektiven katalytischen Reduktion (SCR) angewendet, wobei wässrige Harnstofflösung einem Abgasstrang des Kraftfahrzeugs zugeführt wird. Die bereitzustellende Harnstofflösung kann hierbei in einem Flüssigkeitstank aufgenommen werden. Da der Gefrierpunkt der hierbei verwendeten Harnstofflösung bei ca. -11 °C liegt, muss die Harnstofflösung im Flüssigkeitstank bei geringen Außentemperaturen beheizt werden, um ein Gefrieren der Harnstofflösung zu verhindern. Aus diesem Grund können innerhalb eines Flüssigkeitstanks Heizkörper positioniert werden, um die Harnstofflösung zu erwärmen. Jedoch ist das Einbringen von Heizkörpern in einen Innenraum des Flüssigkeitstanks durch die Geometrie des Flüssigkeitstanks und die Montagemöglichkeiten beschränkt und der Heizkörper kann durch die Harnstofflösung in dem Flüssigkeitstank beschädigt werden.

Die Druckschrift DE 8 615 526 U1 beschreibt einen Brennstofftank aus Kunststoff für Fahrzeuge. Der Brennstofftank umfasst zwei Halbschalen, die entsprechend eine obere Halbschale und eine untere Bodenhalbschale des Brennstofftanks bilden. Der Brennstofftank weist jedoch keinen Heizkörper zum Erwärmen des Brennstofftanks auf.

In der WO 2011/085830 A1 ist eine Tankordnung mit einem Dosiersystem für ein Reduktionsmittel offenbart.

Es ist die der Erfindung zugrundeliegende Aufgabe, einen Flüssigkeitstank mit einem Heizkörper anzugeben, welcher vorteilhaft an dem Flüssigkeitstank angeordnet ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Flüssigkeitstank zur Aufnahme von Flüssigkeit in einem Kraftfahrzeug gelöst, mit einer Flüssigkeitstankschale, wobei in der Flüssigkeitstankschale eine Einwölbung gebildet ist, welche von einem Außenbereich der Flüssigkeitstankschale zugänglich ist, und einem Heizkörper, welcher in der Einwölbung angeordnet ist, und welcher ausgebildet ist, die Flüssigkeitstankschale zu erwärmen.

Der Flüssigkeitstank ist insbesondere als ein Harnstofftank zur Aufnahme einer wässrigen Harnstofflösung ausgebildet und umfasst insbesondere einen Additiv-Tank oder einen SCR-Tank.

Durch den in der Einwölbung angeordneten Heizkörper wird der technische Vorteil erreicht, dass die Flüssigkeitstankschale, bzw. Tankblase, und damit die sich in dem Flüssigkeitstank, bzw. Tankblase, befindende Flüssigkeit wirksam erwärmt werden kann. Zudem ermöglicht die von dem Außenbereich der Flüssigkeitstankschale zugängliche Einwölbung der Flüssigkeitstankschale, dass der Heizkörper nach dem Fertigen des Flüssigkeitstanks von außen wirksam und einfach in die Einwölbung eingeschoben und in der Einwölbung aufgenommen werden kann. Somit muss der Heizkörper nicht in einem Innenraum des Flüssigkeitstanks positioniert werden, um die Flüssigkeit in dem Flüssigkeitstank zu erwärmen.

Die Einwölbung der Flüssigkeitstankschale, welche von dem Außenbereich der Flüssigkeitstankschale zugänglich ist, bildet somit in dem Innenraum des Flüssigkeitstanks eine Auswölbung, die von Flüssigkeit in dem Flüssigkeitstank umgeben ist. Dadurch wird eine wirksame Wärmeübertragung von dem Heizkörper auf die sich in den Innenraum der Flüssigkeitstankschale erstreckende Auswölbung und von dort auf die Flüssigkeit in dem Flüssigkeitstank ermöglicht. Da der Heizkörper von außen in die Einwölbung eingeschoben wird, steht der Heizkörper nicht in direktem Kontakt mit der Flüssigkeit in dem Flüssigkeitstank, so dass z.B. elektrische Kurzschlüsse in dem Heizkörper, Harnstoffablagerungen an dem Heizkörper, und/oder Beschädigungen des Heizkörpers verhindert werden können.

Insbesondere ist die Einwölbung an einer Unterseite der Flüssigkeitstankschale angeordnet, wodurch der Heizkörper sich an der Unterseite der Flüssigkeitstankschale aufgrund der Schwerkraft in dem Flüssigkeitstank sammelnde Flüssigkeit wirksam erwärmen kann.

In einer vorteilhaften Ausführungsform ist der Heizkörper wärmeleitend mit einer Wölbungswandung der Einwölbung verbunden, um die Wölbungswandung wirksam zu erwärmen, wobei der Heizkörper insbesondere kraftschlüssig, formschlüssig oder stoffschlüssig an der Wölbungswandung anliegt.

Dadurch wird beispielsweise der technische Vorteil erreicht, dass eine wirksame Wärmetragung von dem Heizkörper auf die Wölbungswandung und von dort auf die Flüssigkeit in dem Flüssigkeitstank sichergestellt werden kann. Hierbei ermöglicht das kraftschlüssige, formschlüssige oder stoffschlüssige Anliegen des Heizkörpers an der Wölbungswandung eine besonders wirksame Wärmeübertragung.

In einer weiteren vorteilhaften Ausführungsform weist der Heizkörper einen wärmeleitenden Kunststoff auf, um eine wärmeleitende Verbindung zwischen dem Heizkörper und der Flüssigkeitstankschale bereitzustellen, wobei der wärmeleitende Kunststoff insbesondere ein Elastomer oder ein thermoplastisches Elastomer umfasst.

Dadurch wird beispielsweise der technische Vorteil erreicht, dass durch den wärmeleitenden Kunststoff eine wirksame Wärmeübertragung von dem Heizkörper über den wärmeleitenden Kunststoff auf die Flüssigkeitstankschale sichergestellt werden kann. Der wärmeleitende Kunststoff kann insbesondere ein Elastomer oder ein thermoplastisches Elastomer, u.a. einen elastisch verformbaren Kunststoff, umfassen. Durch die elastische Verformbarkeit des wärmeleitenden Kunststoffs wird sichergestellt, dass sich der Heizkörper an die Kontur der Einwölbung anpasst, wodurch sichergestellt werden kann, dass der Heizkörper in der Einwölbung wirksam aufgenommen ist. Dadurch kann z.B. das Auftreten von Luftspalten zwischen dem Heizkörper und der Einwölbung, welche eine wirksame Wärmeübertragung beeinträchtigen können, verhindert werden.

In einer weiteren vorteilhaften Ausführungsform umfasst der wärmeleitende Kunststoff wärmeleitende Füllstoffe.

Durch die wärmeleitenden Füllstoffe, insbesondere Metallpartikel, können besonders wirksame Wärmeleiteigenschaften des wärmeleitenden Kunststoffs sichergestellt werden.

In einer weiteren vorteilhaften Ausführungsform weist der Heizkörper ein metallisches Wärmeleitelement auf, um eine wärmeleitende Verbindung von dem Heizkörper über das metallische Wärmeleitelement an die Flüssigkeitstankschale bereitzustellen, insbesondere über den wärmeleitenden Kunststoff bereitzustellen, und wobei das metallische Wärmeleitelement insbesondere ein Aluminium-Wärmeleitblech umfasst.

Dadurch wird beispielsweise der technische Vorteil erreicht, dass durch das metallische Wärmeleitelement, insbesondere Aluminium-Wärmeleitblech, die Wärmeübertragung insgesamt zwischen dem Heizkörper und der Flüssigkeitstankschale verbessert werden kann. Hierbei wird Wärme von einem Heizelement des Heizkörpers an das metallische Wärmeleitelement wirksam abgegeben, wobei das metallische Wärmeleitelement die aufgenommene Wärme wirksam an die Flüssigkeitstankschale weiterleitet, insbesondere über den wärmeleitenden Kunststoff an die Flüssigkeitstankschale weiterleitet.

In einer weiteren vorteilhaften Ausführungsform weist der Heizkörper ein elektrisches Heizelement zum Erwärmen des Heizkörpers auf, wobei das elektrische Heizelement als ein elektrisches Widerstands-Heizelement ausgebildet ist.

Dadurch wird beispielsweise der technische Vorteil erreicht, dass das elektrische Widerstands-Heizelement wirksam mit einer elektrischen Stromversorgung verbunden werden kann, um den Heizkörper zu erwärmen.

In einer weiteren vorteilhaften Ausführungsform weist der Heizkörper ein elektrisches Heizelement zum Erwärmen des Heizkörpers aufweist, wobei das elektrische Heizelement als ein PTC-Heizelement ausgebildet ist.

Dadurch wird beispielsweise der technische Vorteil erreicht, dass ein PTC-Heizelement, eine besonders wirksame Erwärmung des Heizkörpers ermöglicht. Ein PTC-Heizelement weist darüber hinaus den Vorteil auf, dass es eine eigenständige Regelfunktion der Heizleistung umfasst, so dass eine übermäßig starke Erwärmung des Heizelements vermieden werden kann. Insbesondere kann in dem Heizkörper ein oder mehrere PTC-Heizelemente mit einem oder mehreren elektrischen Widerstands-Heizelementen kombiniert sein.

In einer weiteren vorteilhaften Ausführungsform ist die Einwölbung als eine zylinderförmige Einwölbung ausgebildet und ist der Heizkörper als ein Zylinder ausgebildet, welcher in die zylinderförmige Einwölbung eingeführt ist, oder ist die Einwölbung als eine konusförmige Einwölbung ausgebildet, und ist der Heizkörper als ein Konus ausgebildet, welcher in die konusförmige Einwölbung eingeführt ist.

Dadurch wird beispielsweise der technische Vorteil erreicht, dass die Ausbildung des Heizkörpers als ein Zylinder oder Konus zum Einführen in eine entsprechende zylinderförmige oder konusförmige Einwölbung ein wirksames passgenaues Anpassen der Geometrie des Heizkörpers an die Geometrie der Einwölbung ermöglicht wird. Wenn der Heizkörper als ein Konus ausgebildet ist, kann der Heizkörper besonders wirksam die Einwölbung mit Druck beaufschlagen und dadurch Luftspalte zwischen dem Heizkörper und der Einwölbung verhindern.

In einer weiteren vorteilhaften Ausführungsform weist der Flüssigkeitstank einen Verschluss auf, welcher ausgebildet ist, die Einwölbung mit dem darin aufgenommenen Heizkörper zu verschließen, wobei insbesondere zwischen dem Verschluss und dem Heizkörper ein elastisches Element, insbesondere eine Verschlussfeder, angeordnet ist, welches ausgebildet ist, den Heizkörper mit einer Kraft zu beaufschlagen, um den Heizkörper in der Einwölbung in wärmeleitendem Kontakt zu fixieren.

Dadurch wird beispielsweise der technische Vorteil erreicht, dass durch den Verschluss eine vorteilhafte Positionierung des Heizkörpers in der Einwölbung sichergestellt werden kann, und insbesondere das elastische Element den Heizkörper vorteilhaft in der Einwölbung in wärmeleitendem Kontakt fixiert.

In einer weiteren vorteilhaften Ausführungsform ist in der Flüssigkeitstankschale eine weitere Einwölbung gebildet, welche von dem Außenbereich der Flüssigkeitstankschale zugänglich ist und wobei der Flüssigkeitstank einen weiteren Heizkörper, welcher in der weiteren Einwölbung angeordnet ist, aufweist, wobei der weitere Heizkörper ausgebildet ist, die Flüssigkeitstankschale zu erwärmen, und wobei die Einwölbung und die weitere Einwölbung insbesondere an einer Unterseite der Flüssigkeitstankschale angeordnet sind.

Dadurch wird beispielsweise der technische Vorteil erreicht, dass durch den weiteren Heizkörper eine größere Heizleistung bereitgestellt werden kann, als wenn nur ein einziger Heizkörper verwendet wird. Insbesondere können mehrere weitere Einwölbungen zur Aufnahme von mehreren weiteren Heizkörpern an dem Flüssigkeitstank angeordnet sein. Dadurch dass, die Einwölbung und die weitere Einwölbung insbesondere an der Unterseite der Flüssigkeitstankschale angeordnet sind, können die Heizkörper die Unterseite der Flüssigkeitstankschale besonders wirksam erwärmen. Da sich in dem Flüssigkeitstank befindliche Flüssigkeit aufgrund der Schwerkraft an der Unterseite der Flüssigkeitstankschale sammelt, kann hierdurch eine besonders wirksame Erwärmung der Flüssigkeit in dem Flüssigkeitstank sichergestellt werden.

In der erfindungsgemäßen Ausführungsform umfasst die Flüssigkeitstankschale eine erste Flüssigkeitstankhalbschale mit einem ersten Verbindungselement, das sich von einer ersten Innenwandung der ersten Flüssigkeitstankhalbschale in einen Innenraum des Flüssigkeitstanks erstreckt, und wobei die Flüssigkeitstankschale eine zweite Flüssigkeitstankhalbschale mit einem zweiten Verbindungselement umfasst, das sich von einer zweiten Innenwandung der zweiten Flüssigkeitstankhalbschale in den Innenraum des Flüssigkeitstanks erstreckt, wobei das erste Verbindungselement und das zweite Verbindungselement im Innenraum des Flüssigkeitstanks miteinander verbunden sind, und wobei sich die Einwölbung von dem Außenbereich der Flüssigkeitstankschale in das erste Verbindungselement oder in das zweite Verbindungselement erstreckt, und wobei das erste Verbindungselement und/oder das zweite Verbindungselement insbesondere ein säulenförmiger Abschnitt der ersten Flüssigkeitstankhalbschale und/oder der zweiten Flüssigkeitstankhalbschale ist.

Dadurch wird beispielsweise der technische Vorteil erreicht, dass die Verbindungselemente eine stabile Verbindung zwischen den Flüssigkeitstankhalbschalen des Flüssigkeitstanks sicherstellen. Dadurch, dass sich die Einwölbung von dem Außenbereich der Flüssigkeitstankschale in das erste Verbindungselement oder in das zweite Verbindungselement erstreckt, dient das jeweilige Verbindungselement zudem zur Aufnahme des Heizkörpers, der von dem Außenbereich der Flüssigkeitstankschale in die sich in das jeweilige Verbindungselement erstreckende Einwölbung eingeschoben wird. Da das jeweilige Verbindungselement die Einwölbung aufweist, müssen keine weiteren Einwölbungen an der Flüssigkeitstankschale angeordnet werden, was die Fertigung des Flüssigkeitstanks vereinfacht. Hierbei können die Flüssigkeitstankhalbschalen jeweils mit mehreren Verbindungselementen ausgebildet sein, die jeweils eine Einwölbung aufweisen können, in welche jeweils ein Heizkörper eingeführt werden kann. Das säulenförmige erste und/oder zweite Verbindungselement kann insbesondere eine zylindrische, konische oder sternförmige, Ausbildung aufweisen und dadurch stabile Verbindungselemente mit einer Einwölbung sicherstellen.

In einer weiteren vorteilhaften Ausführungsform weist das erste Verbindungselement eine erste Kontaktfläche auf, weist das zweite Verbindungselement eine zweite Kontaktfläche auf, und ist die erste Kontaktfläche an der zweiten Kontaktfläche befestigbar, um das erste Verbindungselement mit dem zweiten Verbindungselement zu verbinden.

Dadurch wird beispielsweise der technische Vorteil erreicht, dass eine stabile Verbindung zwischen der ersten und zweiten Flüssigkeitstankhalbschale sichergestellt wird.

In einer weiteren vorteilhaften Ausführungsform sind die erste Kontaktfläche und die zweite Kontaktfläche miteinander verschweißt oder verklebt, und wobei zumindest eine der Kontaktflächen insbesondere eine Vertiefung zum Aufnehmen eines Schweiß,- oder Klebstoffaustriebs umfasst.

Dadurch wird beispielsweise der technische Vorteil erreicht, dass eine großflächige und stabile Verbindung zwischen dem ersten Verbindungselement und dem zweiten Verbindungselement bereitgestellt werden kann.

In einer weiteren vorteilhaften Ausführungsform weist die erste Flüssigkeitstankhalbschale erste Stabilisierungselemente zum Stabilisieren des ersten Verbindungselements an der ersten Innenwandung aufweist und/oder weist die zweite Flüssigkeitstankhalbschale zweite Stabilisierungselemente zum Stabilisieren des zweiten Verbindungselements an der zweiten Innenwandung auf, wobei die ersten Stabilisierungselemente und die zweiten Stabilisierungselemente insbesondere als Stabilisierungsrippen und/oder Stabilisierungssicken ausgebildet sind.

Dadurch wird beispielsweise der technische Vorteil erreicht, dass sich durch die Stabilisierungselemente die Stabilität der Verbindungselemente an den Flüssigkeitstankhalbschalen erhöht, wodurch sich die Festigkeit des Flüssigkeitstanks noch weiter verbessert. Eine Stabilisierungsrippe umfasst hierbei eine längliche Erhöhung an dem Übergangsbereich zwischen dem jeweiligen Verbindungselement und der jeweiligen Flüssigkeitstankhalbschale. Eine Stabilisierungssicke ist hierbei eine rillenförmige Verdickung zwischen dem jeweiligen Verbindungselement und der jeweiligen Flüssigkeitstankhalbschale.

In einer weiteren vorteilhaften Ausführungsform sind die ersten Stabilisierungselemente und die zweiten Stabilisierungselemente an einer dem Innenraum des Flüssigkeitstanks zugewandten Innenseite des jeweiligen Verbindungselements oder sind an der dem Außenbereich des Flüssigkeitstanks zugewandten Außenseite des jeweiligen Verbindungselements angeordnet, und wobei sich die ersten Stabilisierungselemente und die zweiten Stabilisierungselemente entlang einer Längsrichtung des jeweiligen Verbindungselements erstrecken oder die ersten Stabilisierungselemente und die zweiten Stabilisierungselemente sternförmig oder radial umlaufend an dem jeweiligen Verbindungselement angeordnet sind.

Dadurch wird beispielsweise der technische Vorteil erreicht, dass ein Anordnen der Stabilisierungselemente an der Außenseite oder Innenseite der entsprechenden Verbindungselemente eine wirksame Stabilisierung der Verbindungselemente an der Flüssigkeitstankschale sicherstellt.

In einer weiteren vorteilhaften Ausführungsform sind die erste Flüssigkeitstankhalbschale und das erste Verbindungselement einstückig durch ein Spritzgussteil, insbesondere Kunststoffformteil, gebildet und/oder sind die zweite Flüssigkeitstankhalbschale und das zweite Verbindungselement einstückig durch ein Spritzgussteil, insbesondere Kunststoffformteil, gebildet.

Dadurch wird beispielsweise der technische Vorteil erreicht, dass sich die Verbindungselemente mit einem geringen Volumen herstellen lassen und sich das Volumen des Flüssigkeitstanks erhöht, dass sich eine gute Krafteinleitung von dem Verbindungselement auf die Flüssigkeitstankhalbschale erzielen lässt und die Flüssigkeitstankschale zusammen mit dem Verbindungselement in einem Arbeitsgang hergestellt werden kann.

In einer weiteren vorteilhaften Ausführungsform weist der Flüssigkeitstank eine Schwallwand zum Hemmen einer Flüssigkeitsbewegung in dem Flüssigkeitstank auf. Dadurch wird beispielsweise der technische Vorteil erreicht, dass eine Schwallwand ein wirksames Hemmen der Flüssigkeitsbewegung sicherstellt

Ausführungsbeispiele der Erfindung sind in den Zeichnungen dargestellt und werden im Folgenden näher beschrieben.

Es zeigen:
- Fig. 1: eine schematische Ansicht eines Flüssigkeitstanks mit einer Flüssigkeitstankschale;
- Fig. 2: eine Ansicht eines Flüssigkeitstanks mit einer Flüssigkeitstankschale;
- Fig. 3: eine Ansicht eines Flüssigkeitstanks mit einer Flüssigkeitstankschale und einem in einer Einwölbung der Flüssigkeitstankschale aufgenommenen Heizkörper;
- Fig. 4: eine Ansicht eines Flüssigkeitstanks mit einem Heizkörper gemäß einer ersten Ausführungsform; und
- Fig. 5: eine Ansicht eines Flüssigkeitstanks mit einem Heizkörper gemäß einer zweiten Ausführungsform.

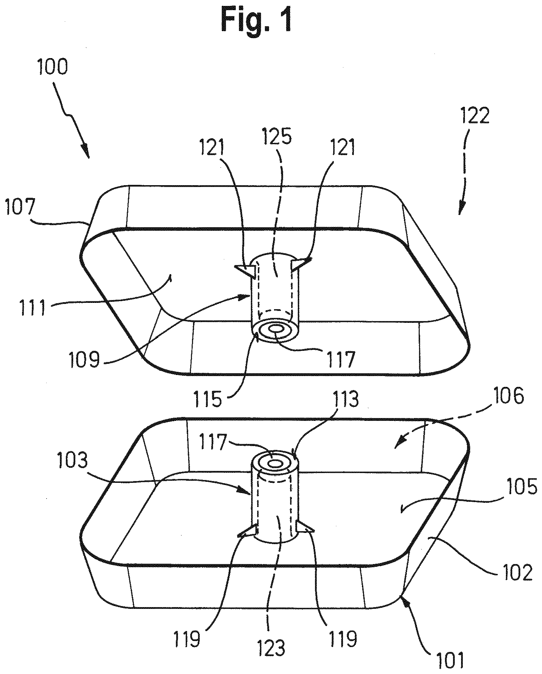

Fig. 1 zeigt eine schematische Ansicht eines Flüssigkeitstanks zur Aufnahme von Flüssigkeit mit einer Flüssigkeitstankschale. Der Flüssigkeitstank 100 ist insbesondere als ein Harnstofftank zur Aufnahme von wässriger Harnstofflösung ausgebildet. Um die Emission von Stickoxiden beim Betrieb von Verbrennungsmotoren, insbesondere Dieselmotoren, in einem Kraftfahrzeug zu reduzieren, wird das Verfahren der selektiven katalytischen Reduktion (SCR) angewendet, wobei die Harnstofflösung einem Abgasstrang des Kraftfahrzeugs zugeführt wird. Die bereitzustellende Harnstofflösung kann hierbei in dem Flüssigkeitstank 100 aufgenommen werden. Da der Gefrierpunkt der hierbei verwendeten Harnstofflösung bei ca. -11 °C liegt, muss die Harnstofflösung bei geringen Außentemperaturen im Harnstofftank beheizt werden, um ein Einfrieren der Harnstofflösung zu verhindern.

Der in Fig. 1 dargestellte Flüssigkeitstank 100 weist eine Flüssigkeitstankschale 101 auf, welche aus einer unteren, ersten Flüssigkeitstankhalbschale 102 und einer oberen, zweiten Flüssigkeitstankhalbschale 107 gebildet ist. Die erste Flüssigkeitstankhalbschale 102 umfasst ein erstes Verbindungselement 103, das sich von einer ersten Innenwandung 105 der ersten Flüssigkeitstankhalbschale 102 in einen Innenraum 106 des Flüssigkeitstanks 100 erstreckt. Die zweite Flüssigkeitstankhalbschale 107 umfasst ein zweites Verbindungselement 109, das sich von einer zweiten Innenwandung 111 der zweiten Flüssigkeitstankhalbschale 107 in den Innenraum 106 des Flüssigkeitstanks 100 erstreckt.

Bei der Herstellung des Flüssigkeitstanks 100 werden die zweite Flüssigkeitstankhalbschale 107 und die erste Flüssigkeitstankhalbschale 102 zusammengesetzt und an ihren Rändern miteinander verbunden. Dabei kommt eine erste Kontaktfläche 113 des ersten Verbindungselementes 103 mit einer zweiten Kontaktfläche 115 des zweiten Verbindungselementes 109 in Berührung. Die erste und die zweite Kontaktfläche 113 und 115 werden miteinander verschweißt oder verklebt. Dadurch wird eine mechanisch feste Verbindung zwischen dem ersten Verbindungselement 103 und dem zweiten Verbindungselement 109 erreicht und die Festigkeit des Flüssigkeitstanks 100 verbessert sich.

Die Verbindung des ersten und des zweiten Verbindungselementes 103 und 109 kann im Allgemeinen auch auf anderem Wege erfolgen. Beispielsweise können das erste oder das zweite Verbindungselement 103 oder 109 auch ein Rastmittel umfassen, das beim Zusammensetzen der ersten und der zweiten Flüssigkeitstankhalbschale 102 und 107 in dem entgegengesetzten zweiten oder ersten Verbindungselement 109 oder 103 einrastet. Im Allgemeinen können alle Ausgestaltungen verwendet werden, die es erlauben eine mechanisch feste Verbindung zwischen dem ersten Verbindungselement 103 und dem zweiten Verbindungselement 109 herzustellen, wobei auch definierte Bewegungen bis zum Anschlag in einer Richtung zugelassen werden.

Wie in Fig. 1 dargestellt ist, weisen die erste Kontaktfläche 113 und die zweite Kontaktfläche 115 jeweils eine Vertiefung 117 auf, welche ausgebildet ist, einen Schweiß,- oder Klebstoffauftrieb aufzunehmen, welcher bei Verschweißen oder Verkleben der ersten Kontaktfläche 113 mit der zweiten Kontaktfläche 115 gebildet wird. Die Vertiefungen 117 können als ein konzentrischer Kreis, mehrere konzentrische Kreise oder als kreuzförmige Vertiefungen 117 auf der ersten Kontaktfläche 113 oder zweiten Kontaktfläche 115 angeordnet sein. In den Vertiefungen 117 wird bei einem Schmelz- und Anpressvorgang verdrängtes Material aufgenommen, so dass die Festigkeit der Verbindungsstelle verbessert wird.

Wie in Fig. 1 dargestellt ist, weist die erste Flüssigkeitstankhalbschale 102 erste Stabilisierungselemente 119 auf, welche ausgebildet sind das erste Verbindungselement 103 an der ersten Innenwandung 105 der ersten Flüssigkeitstankhalbschale 102 zu stabilisieren, und weist die zweite Flüssigkeitstankhalbschale 107 zweite Stabilisierungselemente 121 auf, welche ausgebildet sind das zweite Verbindungselement 109 an der zweiten Innenwandung 111 der zweiten Flüssigkeitstankhalbschale 107 zu stabilisieren. Die Stabilisierungselemente 119, 121 sind hierbei als Stabilisierungsrippen ausgebildet, können aber auch als Stabilisierungssicken ausgebildet sein. Die Stabilisierungselemente 119, 121 sind an einer dem Innenraum 106 des Flüssigkeitstanks 100 zugewandten Innenseite des jeweiligen Verbindungselements 103, 109 oder an einer einem Außenbereich 122 des Flüssigkeitstanks 100 zugewandten Außenseite des jeweiligen Verbindungselements 103, 109 angeordnet. Die Stabilisierungselemente 119, 121 erstrecken sich entlang einer Längsrichtung des jeweiligen Verbindungselements 103, 109 und/oder die Stabilisierungselemente 119, 121 sind sternförmig oder radial umlaufend an dem jeweiligen Verbindungselement 103, 109 angeordnet.

In der Flüssigkeitstankschale 101 ist eine Einwölbung 123 und eine weitere Einwölbung 125 gebildet, welche, wie in Fig. 1 nicht dargestellt ist, von dem Außenbereich 122 des Flüssigkeitstanks 100 aus zugänglich ist. Ein in Fig. 1 nicht dargestellter Heizkörper kann in der Einwölbung 123, bzw. der weiteren Einwölbung 125, angeordnet sein, um die Flüssigkeitstankschale 101 zu erwärmen. Wie in Fig. 1 nicht dargestellt ist, kann die Einwölbung 123 und/oder die weitere Einwölbung 125 als eine zylinderförmige Einwölbung 123 oder eine konusförmige Einwölbung 123 ausgebildet sein, wobei der Heizkörper als ein Zylinder oder ein Konus ausgebildet ist, welcher in die entsprechende zylinderförmige Einwölbung 123, bzw. konusförmige Einwölbung 123 eingeführt ist. Hierbei kann auch ein weiterer Heizkörper in der weiteren Einwölbung 125 aufgenommen sein.

Wie in Fig. 1 dargestellt ist, erstreckt sich die Einwölbung 123 von dem Außenbereich 122 der Flüssigkeitsschale 101 in das erste Verbindungselement 103 und erstreckt sich die weitere Einwölbung 125 in das zweite Verbindungselement 109. Das erste und/oder zweite Verbindungselement 103, 109 ist hierbei als ein säulenförmiges Verbindungselement 103, 109 ausgebildet und kann hierbei eine zylindrische Form, eine konische Form oder auch einen sternförmigen Querschnitt aufweisen.

In der Einwölbung 123 und/oder der weiteren Einwölbung 125 kann jeweils ein in Fig. 1 nicht dargestellter Heizkörper, bzw. weiterer Heizkörper zum Erwärmen der Flüssigkeitstankschale 101 angeordnet sein.

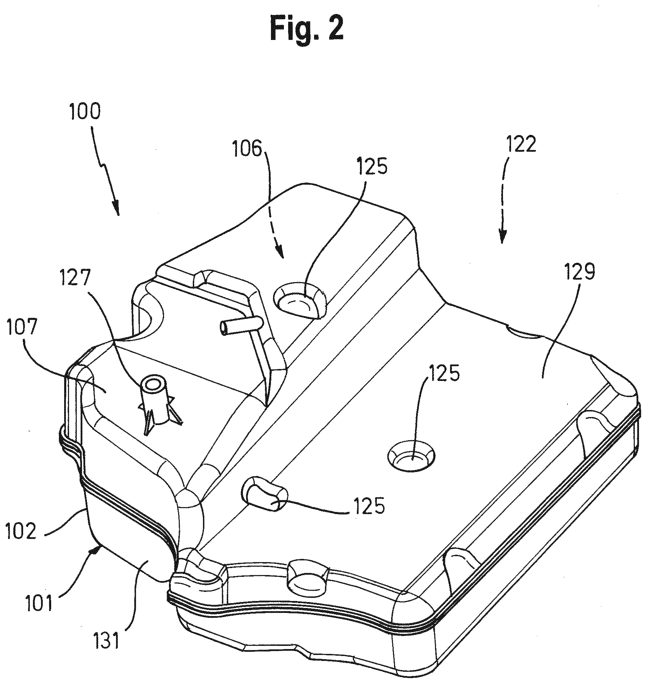

Fig. 2 zeigt eine Ansicht eines Flüssigkeitstanks mit einer Flüssigkeitstankschale. Der Flüssigkeitstank 100 ist beispielsweise ein Tank für eine wässrige Harnstofflösung in einem Fahrzeug. Die Flüssigkeitstankschale 101 umfasst eine erste und zweite Flüssigkeitstankhalbschale 102 und 107, welche beispielsweise Kunststoffformteile sind, die im Spritzgussverfahren hergestellt sind. Hierbei ist die erste Flüssigkeitstankhalbschale 102 und das erste Verbindungselement 103 insbesondere einstückig gebildet und ist die zweite Flüssigkeitstankhalbschale 107 und das zweite Verbindungselement 109 insbesondere einstückig gebildet. Die Kunststoffe können beispielsweise Polyolefine wie Polyethylen oder Polypropylen, Polyamid oder Polyoxymethylen (POM), insbesondere hochdichtes Polyethylen (HDPE) umfassen.

Die beiden Flüssigkeitstankhalbschalen 102 und 107 sind im Randbereich miteinander verklebt oder verschweißt und bilden im Innenraum 106 des Flüssigkeitstanks 100 einen Flüssigkeitshohlraum, in den die Flüssigkeit gefüllt werden kann. Der Flüssigkeitstank 100 weist hierzu einen Einfüllstutzen 127 auf, über den die Flüssigkeit in den Flüssigkeitstank 100 eingefüllt werden kann.

Durch die Verwendung einer Spritzgussformtechnik können die Flüssigkeitstankhalbschalen 102 und 107 gewichts- und kostenoptimiert hergestellt werden, beispielsweise durch eine genaue Definition der benötigten Wandstärken. Daneben können ohne zusätzliche Fertigungsschritte Bauteile wie Pumpenflansche, Stutzen, Halterungen integriert werden. Im Tankinneren wird eine deutlich vereinfachte Montage erreicht, da durch die offenen Flüssigkeitstankhalbschalen 102 und 107 eine gute Zugänglichkeit gewährleistet wird.

Die Festigkeit der Flüssigkeitstanks 100 lässt sich durch Anpassung einer Anordnung und Gestaltung von Stabilisierungselemente 119, 121 und Schwallwänden gezielt lokal beeinflussen. Die Herstellung der Flüssigkeitstankhalbschalen 102 und 107 im Spritzgussverfahren ist besonders vorteilhaft, da sich hierdurch die Verbindungselemente 103 und 109 im Gegensatz zur Herstellung im Blasformverfahren mit einem geringen Volumen herstellen lassen. Dadurch vergrößert sich das Volumen des Flüssigkeitstanks 100.

Der in Fig. 2 dargestellte Flüssigkeitstank 100 umfasst drei Stellen, an denen die Verbindungselemente 103, 109 innerhalb eines in Fig. 2 nicht dargestellten Innenraums 106 des Flüssigkeitstanks 100 angeordnet sind. Die zweiten Verbindungselemente 109 sind einstückig in die zweite Flüssigkeitstankhalbschale 107 integriert und bilden jeweils an einer zweiten Außenwandung 129 eine weitere Einwölbung 125, die von einem Außenbereich 122 der Flüssigkeitstankschale 101 her zugänglich ist. Wie in Fig. 2 nicht dargestellt ist, sind die ersten Verbindungselemente 103 einstückig in die erste Flüssigkeitstankhalbschale 102 integriert und weisen an einer ersten Außenwandung 131 jeweils eine Einwölbung 123 auf, die ebenfalls von dem Außenbereich 122 der ersten Flüssigkeitstankhalbschale 102 her zugänglich ist. Dadurch können das erste Verbindungselement 103 und das zweite Verbindungselement 109 nach dem Zusammensetzen der Flüssigkeitstankhalbschalen 102, 107 miteinander verbunden werden, beispielsweise durch Verschweißen oder Verschrauben und in Fig. 2 nicht dargestellte Heizkörper können in die Einwölbung 123 und/oder die weitere Einwölbung 125 eingebracht werden.

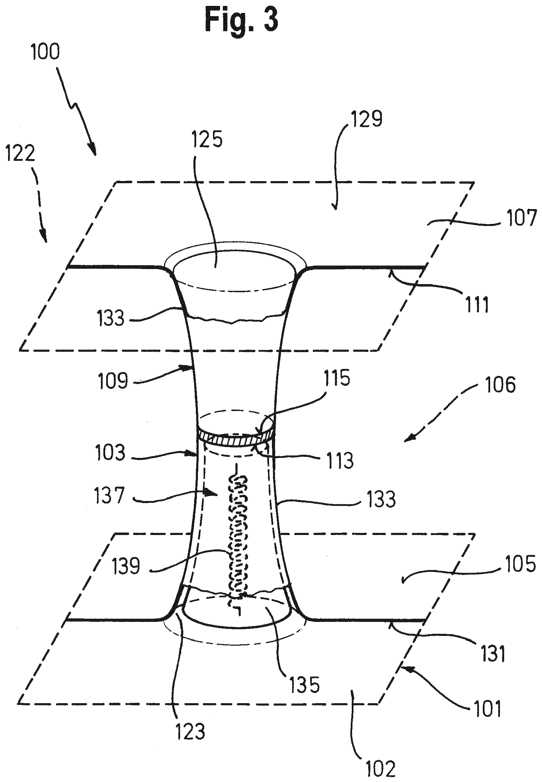

Fig. 3 zeigt eine Ansicht eines Flüssigkeitstanks mit einer Flüssigkeitstankschale und einem in einer Einwölbung der Flüssigkeitstankschale aufgenommenen Heizkörper. Die in Fig. 3 schematisch dargestellte ersten und zweiten Flüssigkeitstankhalbschale 102, 107 weisen eine erste Innenwandung 105 und eine erste Außenwandung 131, sowie eine zweite Innenwandung 111 und eine zweite Außenwandung 129 auf. Ein erstes Verbindungselement 103 erstreckt sich von der ersten Innenwandung 105 und ein zweites Verbindungselement 109 erstreckt sich von der zweiten Innenwandung 111 in den Innenraum 106 des Flüssigkeitstanks 100.

Eine erste Kontaktfläche 113 des ersten Verbindungselements 103 ist an einer zweiten Kontaktfläche 115 des zweiten Verbindungselements 109 befestigt. Die erste und zweiten Kontaktflächen 113, 115 sind insbesondere miteinander verschweißt oder verklebt. Eine optionale Vertiefung 117 der ersten und/oder zweiten Kontaktfläche 113, 115 zur Aufnahme des Schweiß,- und/oder Klebstoffaustriebs ist in Fig. 3 nicht dargestellt.

Das erste und zweite Verbindungselement 103, 109 sind als säulenförmige Abschnitte der ersten und zweiten Flüssigkeitstankhalbschale 102, 107 ausgebildet und weisen eine konische Form auf. Eine Einwölbung 123 der ersten Flüssigkeitstankhalbschale 102 erstreckt sich in das erste Verbindungselement 103 und eine weitere Einwölbung 125 der zweiten Flüssigkeitstankhalbschale 107 erstreckt sich in das zweite Verbindungselement 109. Die Einwölbung 123, bzw. weitere Einwölbung 125 sind jeweils durch eine Wölbungswandung 133 begrenzt.

In der Einwölbung 123 des ersten Verbindungselements 103 ist ein Heizkörper 135 angeordnet, welcher ausgebildet ist, das erste Verbindungselement 103 zu erwärmen, und welcher insbesondere als eine Heizpatrone ausgebildet ist. Der Heizkörper 135 liegt hierbei an der Wölbungswandung 133, insbesondere kraftschlüssig, formschlüssig oder stoffschlüssig, an. Der Heizkörper 135 umfasst ein elektrisches Heizelement 139, welches insbesondere als ein elektrisches Widerstandsheizelement ausgebildet ist, aber alternativ auch als ein PTC-Heizelement ausgebildet sein kann. Wie in Fig. 3 nicht dargestellt, ist das elektrische Heizelement 139 insbesondere mit einer elektrischen Stromversorgung angeschlossen, um dem elektrischen Heizelement 139 elektrische Energie zum Erwärmen des ersten Verbindungselements 103 zuzuführen.

Der Heizkörper 135 kann einen wärmeleitende Kunststoff 137 aufweisen, um eine wirksame wärmeleitende Verbindung zwischen dem Heizkörper 135 und der Wölbungswandung 133 sicherzustellen. Um einen besonders wirksamen Wärmeübergang von dem Heizelement 139 auf die Wölbungswandung 133 sicherzustellen, kann der wärmeleitender Kunststoff 137 insbesondere wärmeleitende Füllstoffe, wie z.B. Metallpartikel, umfassen. Der wärmeleitende Kunststoff 137 kann insbesondere ein Elastomer oder ein thermoplastisches Elastomer umfassen, bzw. elastisch verformbare Eigenschaften aufweisen, welche ein wirksames Einpassen des Heizkörpers 135 in die Einwölbung 123 sicherstellen. Zudem stellt der wärmeleitende Kunststoff 137 eine elektrische Isolation zwischen dem Heizkörper 135 und dem ersten Verbindungselement 103 bereit. Um einen besonders wirksamen Wärmeübergang zu gewährleisten kann der Heizkörper 135 insbesondere ein in Fig. 3 nicht dargestelltes metallisches Wärmeleitelement aufweisen, wobei das metallische Wärmeleitelement insbesondere ein Aluminium-Wärmeleitblech umfasst.

Der Heizkörper 135, insbesondere die Heizpatrone, kann hierbei von dem Außenbereich 122 des Flüssigkeitstanks 100 aus in die Einwölbung 123 der ersten Flüssigkeitshalbschale 102 einschoben werden und wirksam in der Einwölbung 123 positioniert werden. Durch den wärmeleitenden Kunststoff 137 wird hierbei eine wirksame Aufnahme des Heizkörper 135 in der Einwölbung 123 sichergestellt, da sich der aus wärmeleitenden Kunststoff 137 bestehende konisch geformte Heizkörper 135 an die konische Form der Einwölbung 123 in dem ersten Verbindungselement 103 anpasst. Dadurch kann eine dichte kraftschlüssige, formschlüssige oder stoffschlüssige Verbindung zwischen dem Heizkörper 135 und der Einwölbung 123 sichergestellt werden, wodurch Spalten, bzw. Luftstellen, welche eine beeinträchtigte Wärmeübertragung verursachen können, vermieden werden.

Wie in Fig. 3 nicht dargestellt ist, kann der Flüssigkeitstank 100 einen Verschluss aufweisen, welcher ausgebildet ist, die Einwölbung 123 mit dem darin aufgenommenen Heizkörper 135 zu verschließen und somit eine wirksame Fixierung des Heizkörpers 135 in der Einwölbung 123 zu gewährleisten. Hierbei ist insbesondere zwischen dem Verschluss und dem Heizkörper 135 ein elastisches Element, z.B. eine Verschlussfeder, angeordnet, welche ausgebildet ist, den Heizkörper 135 mit einer Kraft zu beaufschlagen, um den Heizkörper 135 in der Einwölbung 123 zu fixieren.

In der Ausführungsform gemäß Fig. 3 ist ein Heizkörper 135 in der Einwölbung 123 eingebracht. Ein weiterer Heizkörper kann entsprechend in der weiteren Einwölbung 125 eingebracht sein, um das zweite Verbindungselement 109 zu erwärmen. Zudem ist es alternativ möglich, dass sowohl ein Heizkörper 135 in der Einwölbung 123 eingebracht werden kann und zudem ein weiterer Heizkörper in die weitere Einwölbung 125 eingebracht werden kann, um sowohl das erste Verbindungselement 103 als auch das zweite Verbindungselement 109 zu erwärmen.

Insbesondere kann einer oder mehrere Heizkörper 135 in einer oder mehreren Einwölbungen 123 von einem oder mehreren ersten Verbindungselementen 103 aufgenommen sein, um die untere, erste Flüssigkeitstankhalbschale 102 und die darin aufgenommene Flüssigkeit wirksam zu erwärmen. Dies ist insbesondere von Vorteil, da sich in den Flüssigkeitstank 100 eingeführte Flüssigkeit nach dem Einfüllen aufgrund der Schwerkraft zuerst am Boden der ersten Flüssigkeitstankhalbschale 102 sammelt.

Somit stellt der Heizkörper 135 eine wirksame Wärmeübertragung von dem Heizkörper 135 auf das erste Verbindungselement 103 sicher, da eine große Fläche zur Wärmeübertragung zwischen dem Heizkörper 135 und dem ersten Verbindungselement 103 gewährleistet wird. Durch den wärmeleitenden Kunststoff 137 wird sichergestellt, dass die Wärmeübertragung nicht durch unterbrochene Wärmeleitpfade, wie z.B. Lufteinschlüsse, unterbrochen ist. Ein hierbei verwendeter optional mit wärmeleitenden Füllstoffen versehener wärmeleitender Kunststoff 137 muss hierbei gute wärmeleitende Eigenschaften aufweisen, elektrisch isolierend sein, und elastische Eigenschaften aufweisen und einen dauerhaften Wärmeübergang aufweisen ohne dass Ablösungen auftreten. Hierbei sind insbesondere Elastomere oder thermoplastische Elastomere, z.B. Elastomere mit wärmeleitenden Füllstoffen, für die Verwendung als wärmeleitender Kunststoff 137 gut geeignet.

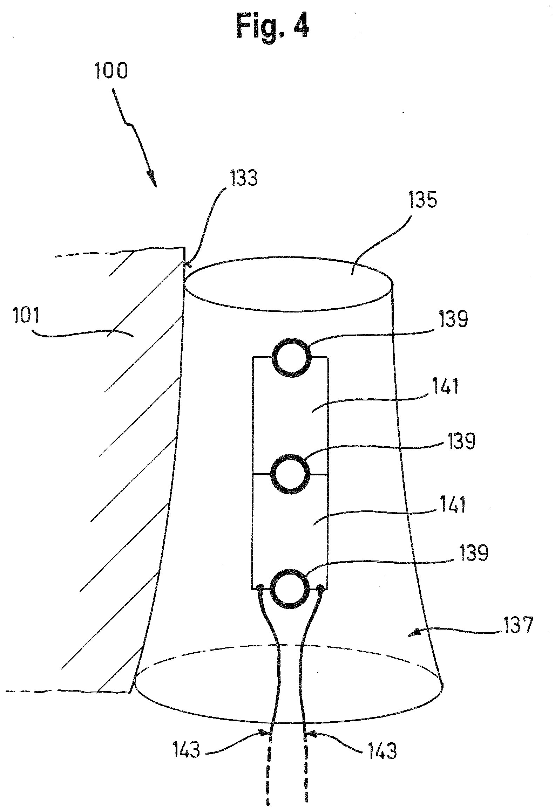

Fig. 4 zeigt eine Ansicht eines Flüssigkeitstanks mit einem Heizkörper gemäß einer ersten Ausführungsform.

Der Heizkörper 135 ist als ein Konus ausgebildet, welcher in eine in Fig. 4 nicht dargestellte konusförmige Einwölbung 123 des Flüssigkeitstanks 100 eingeführt ist und an einer Wölbungswandung 133 des Flüssigkeitstanks 100 spaltfrei anliegt, um eine verlustfreie Wärmeübertragung von dem Heizkörper 135 auf die Wölbungswandung 133 sicherzustellen.

Der Heizkörper 135 umfasst elektrische Heizelemente 139, welche insbesondere als PTC-Heizelemente ausgebildet ist. Die elektrischen Heizelemente 139 sind auf Leitelementen 141 angeordnet und durch elektrische Stromleitungen 143 mit einer elektrischen Stromversorgung verbunden, um dem elektrischen Heizelement 139 elektrische Energie zum Erwärmen zuzuführen.

Der Heizkörper 135 kann einen wärmeleitende Kunststoff 137 aufweisen, um eine wirksame wärmeleitende Verbindung zwischen dem Heizkörper 135 und der Wölbungswandung 133 sicherzustellen. Um einen besonders wirksamen Wärmeübergang zwischen dem Heizelement 139 und der Wölbungswandung 133 sicherzustellen, kann der wärmeleitende Kunststoff 137 insbesondere wärmeleitende Füllstoffe, wie z.B. Metallpartikel, umfassen.

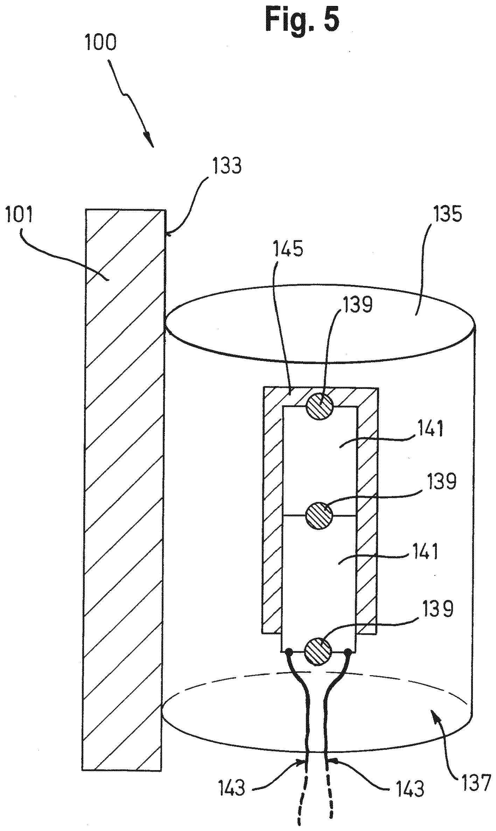

Fig. 5 zeigt eine Ansicht eines Flüssigkeitstanks mit einem Heizkörper gemäß einer zweiten Ausführungsform.

Der Heizkörper 135 ist als ein Zylinder ausgebildet, welcher in eine in Fig. 5 nicht dargestellte zylinderförmige Einwölbung 123 des Flüssigkeitstanks 100 eingeführt ist und an einer Wölbungswandung 133 des Flüssigkeitstanks 100 spaltfrei anliegt, um eine verlustfreie Wärmeübertragung von dem Heizkörper 135 auf die Wölbungswandung 133 sicherzustellen.

Der Heizkörper 135 umfasst elektrische Heizelemente 139, welche insbesondere als PTC-Heizelemente ausgebildet sind. Die elektrischen Heizelemente 139 sind auf Leitelementen 141 angeordnet und durch elektrische Stromleitungen 143 mit einer elektrischen Stromversorgung verbunden, um dem elektrischen Heizelement 139 elektrische Energie zum Erwärmen zuzuführen.

Der Heizkörper 135 kann einen wärmeleitende Kunststoff 137 aufweisen, um eine wirksame wärmeleitende Verbindung zwischen dem Heizkörper 135 und der Wölbungswandung 133 sicherzustellen. Um einen besonders wirksamen Wärmeübergang zwischen dem Heizelement 139 und der Wölbungswandung 133 sicherzustellen, kann der wärmeleitende Kunststoff 137 insbesondere wärmeleitende Füllstoffe, wie z.B. Metallpartikel, umfassen.

Um die Wärmeübertragung von dem Heizelement 139 auf den wärmeleitenden Kunststoff 137 zu verbessern weist der Heizkörper 135 ein metallisches Wärmeleitelement 145 auf, welches insbesondere ein Aluminium-Wärmeleitblech umfasst. Das metallische Wärmeleitelement 145 ist insbesondere mit dem Heizelement 139 thermisch verbunden, um von dem Heizelement 139 erzeugte Wärme wirksam abzuleiten und auf den wärmeleitenden Kunststoff 137 des Heizkörpers 135 zu übertragen.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Flüssigkeitstank
- 101: Flüssigkeitstankschale
- 102: Erste Flüssigkeitstankhalbschale
- 103: Erstes Verbindungselement
- 105: Erste Innenwandung der ersten Flüssigkeitstankhalbschale
- 106: Innenraum des Flüssigkeitstanks
- 107: Zweite Flüssigkeitstankhalbschale
- 109: Zweites Verbindungselement
- 111: Zweite Innenwandung der zweiten Flüssigkeitstankhalbschale
- 113: Erste Kontaktfläche
- 115: Zweite Kontaktfläche
- 117: Vertiefung
- 119: Erste Stabilisierungselemente
- 121: Zweite Stabilisierungselemente
- 122: Außenbereich des Flüssigkeitstanks
- 123: Einwölbung
- 125: Weitere Einwölbung
- 127: Einfüllstutzen
- 129: Zweite Außenwandung
- 131: Erste Außenwandung
- 133: Wölbungswandung
- 135: Heizkörper
- 137: Wärmeleitender Kunststoff
- 139: Elektrisches Heizelement
- 141: Leitelemente
- 143: Elektrische Stromleitung
- 145: Metallisches Wärmeleitelement

## Patentansprüche

1. Flüssigkeitstank (100) zur Aufnahme von Flüssigkeit in einem Kraftfahrzeug, mit:
einer Flüssigkeitstankschale (101), wobei in der Flüssigkeitstankschale (101) eine Einwölbung (123) gebildet ist, welche von einem Außenbereich (122) der Flüssigkeitstankschale (101) zugänglich ist; und
einem Heizkörper (135), welcher in der Einwölbung (123) angeordnet ist, und welcher ausgebildet ist, die Flüssigkeitstankschale (101) zu erwärmen,
wobei die Flüssigkeitstankschale (101) eine erste Flüssigkeitstankhalbschale (102) mit einem ersten Verbindungselement (103) umfasst, das sich von einer ersten Innenwandung (105) der ersten Flüssigkeitstankhalbschale (102) in einen Innenraum (106) des Flüssigkeitstanks (100) erstreckt, und wobei die Flüssigkeitstankschale (101) eine zweite Flüssigkeitstankhalbschale (107) mit einem zweiten Verbindungselement (109) umfasst, das sich von einer zweiten Innenwandung (111) der zweiten Flüssigkeitstankhalbschale (107) in den Innenraum (106) des Flüssigkeitstanks (100) erstreckt, wobei das erste Verbindungselement (103) und das zweite Verbindungselement (109) im Innenraum (106) des Flüssigkeitstanks miteinander verbunden sind, und wobei sich die Einwölbung (123) von dem Außenbereich (122) der Flüssigkeitstankschale (101) in das erste Verbindungselement (103) oder in das zweite Verbindungselement (109) erstreckt.

2. Flüssigkeitstank (100) nach Anspruch 1, wobei der Heizkörper (135) wärmeleitend mit einer Wölbungswandung (133) der Einwölbung (123) verbunden ist, um die Wölbungswandung (133) wirksam zu erwärmen, und wobei der Heizkörper (135) insbesondere kraftschlüssig, formschlüssig oder stoffschlüssig an der Wölbungswandung (133) anliegt.

3. Flüssigkeitstank (100) nach Anspruch 1 oder 2, wobei der Heizkörper (135) einen wärmeleitenden Kunststoff (137) aufweist, um eine wärmeleitende Verbindung zwischen dem Heizkörper (135) und der Flüssigkeitstankschale (101) bereitzustellen, wobei der wärmeleitende Kunststoff (137) ein Elastomer oder ein thermoplastisches Elastomer umfasst.

4. Flüssigkeitstank (100) nach Anspruch 3, wobei der wärmeleitende Kunststoff (137) wärmeleitende Füllstoffe umfasst.

5. Flüssigkeitstank (100) nach einem der vorangehenden Ansprüche, wobei der Heizkörper (135) ein metallisches Wärmeleitelement (145) aufweist, um eine wärmeleitende Verbindung von dem Heizkörper (135) über das metallische Wärmeleitelement (145) an die Flüssigkeitstankschale (101) bereitzustellen, insbesondere über den wärmeleitenden Kunststoff (137) bereitzustellen, und wobei das metallische Wärmeleitelement (145) insbesondere ein Aluminium-Wärmeleitblech umfasst.

6. Flüssigkeitstank (100) nach einem der vorangehenden Ansprüche, wobei der Heizkörper (135) ein elektrisches Heizelement (139) zum Erwärmen des Heizkörpers (135) aufweist, und wobei das elektrische Heizelement (139) als ein elektrisches Widerstands-Heizelement ausgebildet ist.

7. Flüssigkeitstank (100) nach einem der vorangehenden Ansprüche, wobei der Heizkörper (135) ein elektrisches Heizelement (139) zum Erwärmen des Heizkörpers (135) aufweist, und wobei das elektrische Heizelement (139) als ein PTC-Heizelement ausgebildet ist.

8. Flüssigkeitstank (100) nach einem der vorangehenden Ansprüche, wobei die Einwölbung (123) als eine zylinderförmige Einwölbung (123) ausgebildet ist, und der Heizkörper (135) als ein Zylinder ausgebildet ist, welcher in die zylinderförmige Einwölbung (123) eingeführt ist, oder wobei die Einwölbung (123) als eine konusförmige Einwölbung (123) ausgebildet ist, und der Heizkörper (135) als ein Konus ausgebildet ist, welcher in die konusförmige Einwölbung (123) eingeführt ist.

9. Flüssigkeitstank (100) nach einem der vorangehenden Ansprüche, wobei der Flüssigkeitstank (100) einen Verschluss aufweist, welcher ausgebildet ist, die Einwölbung (123) mit dem darin aufgenommenen Heizkörper (135) zu verschließen, wobei insbesondere zwischen dem Verschluss und dem Heizkörper (135) ein elastisches Element, insbesondere eine Verschlussfeder, angeordnet ist, welches ausgebildet ist, den Heizkörper (135) mit einer Kraft zu beaufschlagen, um den Heizkörper (135) in der Einwölbung (123) in wärmeleitendem Kontakt zu fixieren.

10. Flüssigkeitstank (100) nach einem der vorangehenden Ansprüche, wobei in der Flüssigkeitstankschale (101) eine weitere Einwölbung (125) gebildet ist, welche von dem Außenbereich (122) der Flüssigkeitstankschale (101) zugänglich ist und wobei der Flüssigkeitstank (100) einen weiteren Heizkörper, welcher in der weiteren Einwölbung (125) angeordnet ist, aufweist, wobei der weitere Heizkörper ausgebildet ist, die Flüssigkeitstankschale (101) zu erwärmen, und wobei die Einwölbung (123) und die weitere Einwölbung (125) insbesondere an einer Unterseite der Flüssigkeitstankschale (101) angeordnet sind.

11. Flüssigkeitstank (100) nach einem der vorangehenden Ansprüche, wobei das erste Verbindungselement (103) und/oder das zweite Verbindungselement (109) ein säulenförmiger Abschnitt der ersten Flüssigkeitstankhalbschale (102) und/oder der zweiten Flüssigkeitstankhalbschale (107) ist.

12. Flüssigkeitstank (100) nach einem der vorangehenden Ansprüche, wobei das erste Verbindungselement (103) eine erste Kontaktfläche (113) aufweist, wobei das zweite Verbindungselement (109) eine zweite Kontaktfläche (115) aufweist, und wobei die erste Kontaktfläche (113) an der zweiten Kontaktfläche (115) befestigbar ist, um das erste Verbindungselement (103) mit dem zweiten Verbindungselement (109) zu verbinden.

13. Flüssigkeitstank (100) nach einem der vorangehenden Ansprüche, wobei die erste Flüssigkeitstankhalbschale (102) erste Stabilisierungselemente (119) zum Stabilisieren des ersten Verbindungselements (103) an der ersten Innenwandung (105) aufweist und/oder wobei die zweite Flüssigkeitstankhalbschale (107) zweite Stabilisierungselemente (121) zum Stabilisieren des zweiten Verbindungselements (109) an der zweiten Innenwandung (111) aufweist, wobei die ersten Stabilisierungselemente (119) und die zweiten Stabilisierungselemente (121) insbesondere als Stabilisierungsrippen und/oder Stabilisierungssicken ausgebildet sind.

14. Flüssigkeitstank (100) nach Anspruch 13, wobei die ersten Stabilisierungselemente (119) und die zweiten Stabilisierungselemente (121) an einer dem Innenraum (106) des Flüssigkeitstanks (100) zugewandten Innenseite des jeweiligen Verbindungselements (103, 109) oder an der dem Außenbereich (122) des Flüssigkeitstanks (100) zugewandten Außenseite des jeweiligen Verbindungselements (103, 109) angeordnet sind, und wobei sich die ersten Stabilisierungselemente (119) und die zweiten Stabilisierungselemente (121) entlang einer Längsrichtung des jeweiligen Verbindungselements (103, 109) erstrecken oder die ersten Stabilisierungselemente (119) und die zweiten Stabilisierungselemente (121) sternförmig oder radial umlaufend an dem jeweiligen Verbindungselement (103, 109) angeordnet sind.

15. Flüssigkeitstank (100) nach einem der vorangehenden Ansprüche, wobei die erste Flüssigkeitstankhalbschale (102) und das erste Verbindungselement (103) einstückig durch ein Spritzgussteil, insbesondere Kunststoffformteil, gebildet sind und/oder die zweite Flüssigkeitstankhalbschale (107) und das zweite Verbindungselement (109) einstückig durch ein Spritzgussteil, insbesondere Kunststoffformteil, gebildet sind.

## Claims

1. A liquid tank (100) for holding liquid in a motor vehicle, having:
a liquid tank shell (101), wherein a concavity (123) that is accessible from an external area (122) of the liquid tank shell (101) is formed in the liquid tank shell (101); and
a heating body (135) that is situated in the concavity (123) and designed to heat the liquid tank shell (101),
wherein the liquid tank shell (101) includes a first liquid tank half-shell (102) having a first connecting element (103) that extends from a first inner wall (105) of the first liquid tank half-shell (102) into an interior (106) of the liquid tank (100), and wherein the liquid tank shell (101) includes a second liquid tank half-shell (107) having a second connecting element (109) that extends from a second inner wall (111) of the second liquid tank half-shell (107) into the interior (106) of the liquid tank (100), wherein the first connecting element (103) and the second connecting element (109) are joined together in the interior (106) of the liquid tank, and wherein the concavity (123) extends from the external area (122) of the liquid tank shell (101) into the first connecting element (103) or into the second connecting element (109).

2. The liquid tank (100) according to Claim 1, wherein the heating body (135) is heat-conductively connected to a curved wall (133) of the concavity (123) in order to effectively heat the curved wall (133), and wherein the heating body (135) rests against the curved wall (133) in particular in a force-fit, form-fit, or integrally joined manner.

3. The liquid tank (100) according to Claim 1 or 2, wherein the heating body (135) includes a heat-conducting plastic (137) in order to provide a heat-conducting connection between the heating body (135) and the liquid tank shell (101), wherein the heat-conducting plastic (137) includes an elastomer or a thermoplastic elastomer.

4. The liquid tank (100) according to Claim 3, wherein the heat-conducting plastic (137) includes heat-conducting fillers.

5. The liquid tank (100) according to one of the preceding claims, wherein the heating body (135) has a metallic heat-conducting element (145) in order to provide a heat-conducting connection from the heating body (135), via the metallic heat-conducting element (145), in particular via the heat-conducting plastic (137), to the liquid tank shell (101), and wherein the metallic heat-conducting element (145) in particular includes an aluminum heat-conducting plate.

6. The liquid tank (100) according to one of the preceding claims, wherein the heating body (135) has an electric heating element (139) for heating the heating body (135), and wherein the electric heating element (139) is designed as an electric resistance heating element.

7. The liquid tank (100) according to one of the preceding claims, wherein the heating body (135) has an electric heating element (139) for heating the heating body (135), and wherein the electric heating element (139) is designed as a PTC heating element.

8. The liquid tank (100) according to one of the preceding claims, wherein the concavity (123) is designed as a cylindrical concavity (123) and the heating body (135) is designed as a cylinder that is inserted into the cylindrical concavity (123), or wherein the concavity (123) is designed as a conical concavity (123) and the heating body (135) is designed as a cone that is inserted into the conical concavity (123).

9. The liquid tank (100) according to one of the preceding claims, wherein the liquid tank (100) has a closure that is designed to close the concavity (123) with the heating body (135) accommodated therein, wherein situated in particular between the closure and the heating body (135) is an elastic element, in particular a closing spring, that is designed to act on the heating body (135) with a force in order to fix the heating body (135) in the concavity (123) in heat-conducting contact.

10. The liquid tank (100) according to one of the preceding claims, wherein a further concavity (125) that is accessible from the external area (122) of the liquid tank shell (101) is formed in the liquid tank shell (101), and wherein the liquid tank (100) has a further heating body that is situated in the further concavity (125), wherein the further heating body is designed to heat the liquid tank shell (101), and wherein the concavity (123) and the further concavity (125) are situated in particular on the bottom side of the liquid tank shell (101) .

11. The liquid tank (100) according to one of the preceding claims, wherein the first connecting element (103) and/or the second connecting element (109) are/is a pillar-shaped section of the first liquid tank half-shell (102) and/or of the second liquid tank half-shell (107), respectively.

12. The liquid tank (100) according to one of the preceding claims, wherein the first connecting element (103) has a first contact surface (113), wherein the second connecting element (109) has a second contact surface (115), and wherein the first contact surface (113) is attachable to the second contact surface (115) in order to connect the first connecting element (103) to the second connecting element (109).

13. The liquid tank (100) according to one of the preceding claims, wherein the first liquid tank half-shell (102) has first stabilizing elements (119) for stabilizing the first connecting element (103) on the first inner wall (105), and/or wherein the second liquid tank half-shell (107) has second stabilizing elements (121) for stabilizing the second connecting element (109) on the second inner wall (111), wherein the first stabilizing elements (119) and the second stabilizing elements (121) are designed in particular as stabilizing ribs and/or stabilizing ridges.

14. The liquid tank (100) according to Claim 13, wherein the first stabilizing elements (119) and the second stabilizing elements (121) are situated on an inner side of the particular connecting element (103, 109) facing the interior (106) of the liquid tank (100), or on the outer side of the particular connecting element (103, 109) facing the external area (122) of the liquid tank (100), and wherein the first stabilizing elements (119) and the second stabilizing elements (121) extend along a longitudinal direction of the particular connecting element (103, 109), or the first stabilizing elements (119) and the second stabilizing elements (121) are situated in a star-shaped pattern or radially circumferentially on the particular connecting element (103, 109).

15. The liquid tank (100) according to one of the preceding claims, wherein the first liquid tank half-shell (102) and the first connecting element (103) are integrally formed as an injection-molded part, in particular a plastic molded part, and/or the second liquid tank half-shell (107) and the second connecting element (109) are integrally formed as an injection-molded part, in particular a plastic molded part.

## Revendications

1. Réservoir de liquide (100) pour recevoir un liquide dans un véhicule automobile, comprenant :
une coque de réservoir de liquide (101), dans lequel un bombage concave (123) accessible depuis l'extérieur (122) de la coque de réservoir de liquide (101) est formé dans la coque de réservoir de liquide (101) ; et
un corps de chauffe (135) disposé dans le bombage concave (123) et réalisé pour chauffer la coque de réservoir de liquide (101),
dans lequel la coque de réservoir de liquide (101) comprend une première demi-coque de réservoir de liquide (102) avec un premier raccord (103) s'étendant depuis une première paroi intérieure (105) de la première demi-coque de réservoir de liquide (102) jusqu'à l'intérieur (106) du réservoir de liquide (100), et dans lequel la coque de réservoir de liquide (101) comprend une deuxième demi-coque de réservoir de liquide (107) avec un deuxième raccord (109) s'étendant depuis une deuxième paroi intérieure (111) de la deuxième demi-coque de réservoir de liquide (107) jusqu'à l'intérieur (106) du réservoir de liquide (100), dans lequel le premier raccord (103) et le deuxième raccord (109) sont reliés ensemble à l'intérieur (106) du réservoir de liquide, et dans lequel le bombage concave (123) s'étend depuis l'extérieur (122) de la coque de réservoir de liquide (101) jusque dans le premier raccord (103) ou dans le deuxième raccord (109).

2. Réservoir de liquide (100) selon la revendication 1, dans lequel le corps de chauffe (135) est relié de manière thermoconductrice à une paroi de bombage (133) du bombage concave (123) pour chauffer efficacement la paroi de bombage (133), et dans lequel le corps de chauffe (135) est plaqué contre la paroi de bombage (133) en particulier par adhérence, par complémentarité de forme ou par liaison de matière.

3. Réservoir de liquide (100) selon la revendication 1 ou 2, dans lequel le corps de chauffe (135) présente une matière plastique thermoconductrice (137) afin de fournir une connexion thermoconductrice entre le corps de chauffe (135) et la coque de réservoir de liquide (101), la matière plastique thermoconductrice (137) comprenant un élastomère ou un élastomère thermoplastique.

4. Réservoir de liquide (100) selon la revendication 3, dans lequel la matière plastique thermoconductrice (137) comprend des matières de charge thermoconductrices.

5. Réservoir de liquide (100) selon l'une quelconque des revendications précédentes, dans lequel le corps de chauffe (135) présente un élément thermoconducteur métallique (145) afin de fournir une connexion thermoconductrice du corps de chauffe (135) à la coque de réservoir de liquide (101) en passant par l'élément thermoconducteur métallique (145), en particulier par la matière plastique thermoconductrice (137), et dans lequel l'élément thermoconducteur métallique (145) comprend en particulier une tôle thermoconductrice en aluminium.

6. Réservoir de liquide (100) selon l'une quelconque des revendications précédentes, dans lequel le corps de chauffe (135) présente un élément chauffant électrique (139) pour chauffer le corps de chauffe (135), et dans lequel l'élément chauffant électrique (139) est réalisé sous la forme d'un élément chauffant à résistance électrique.

7. Réservoir de liquide (100) selon l'une quelconque des revendications précédentes, dans lequel le corps de chauffe (135) présente un élément chauffant électrique (139) pour chauffer le corps de chauffe (135), et dans lequel l'élément chauffant électrique (139) est réalisé sous la forme d'un élément chauffant à CTP.

8. Réservoir de liquide (100) selon l'une quelconque des revendications précédentes, dans lequel le bombage concave (123) est réalisé sous la forme d'un bombage concave cylindrique (123), et le corps de chauffe (135) est réalisé sous la forme d'un cylindre introduit dans le bombage concave cylindrique (123), ou dans lequel le bombage concave (123) est réalisé sous la forme d'un bombage concave conique (123), et le corps de chauffe (135) est réalisé sous la forme d'un cône introduit dans le bombage concave conique (123).

9. Réservoir de liquide (100) selon l'une quelconque des revendications précédentes, dans lequel le réservoir de liquide (100) présente une fermeture réalisée pour fermer le bombage concave (123) avec le corps de chauffe (135) logé dans celui-ci, dans lequel, en particulier entre la fermeture et le corps de chauffe (135), un élément élastique, en particulier un ressort de fermeture, est disposé qui est réalisé pour exercer une force sur le corps de chauffe (135) afin de fixer le corps de chauffe (135) dans le bombage concave (123) en contact thermoconducteur.

10. Réservoir de liquide (100) selon l'une quelconque des revendications précédentes, dans lequel, dans la coque de réservoir de liquide (101), un bombage concave supplémentaire (125) est formé qui est accessible depuis l'extérieur (122) de la coque de réservoir de liquide (101), et dans lequel le réservoir de liquide (100) présente un corps de chauffe supplémentaire disposé dans le bombage concave supplémentaire (125), dans lequel le corps de chauffe supplémentaire est réalisé pour chauffer la coque de réservoir de liquide (101), et dans lequel le bombage concave (123) et le bombage concave supplémentaire (125) sont disposés en particulier sur la face inférieure de la coque de réservoir de liquide (101).

11. Réservoir de liquide (100) selon l'une quelconque des revendications précédentes, dans lequel le premier raccord (103) et/ou le deuxième raccord (109) correspondent à une partie en colonne de la première demi-coque de réservoir de liquide (102) et/ou de la deuxième demi-coque de réservoir de liquide (107).

12. Réservoir de liquide (100) selon l'une quelconque des revendications précédentes, dans lequel le premier raccord (103) présente une première surface de contact (113), le deuxième raccord (109) présente une deuxième surface de contact (115), et la première surface de contact (113) peut être fixée à la deuxième surface de contact (115) pour relier le premier raccord (103) au deuxième raccord (109).

13. Réservoir de liquide (100) selon l'une quelconque des revendications précédentes, dans lequel la première demi-coque de réservoir de liquide (102) présente des premiers éléments de stabilisation (119) pour stabiliser le premier raccord (103) sur la première paroi intérieure (105) et/ou la deuxième demi-coque de réservoir de liquide (107) présente des deuxièmes éléments de stabilisation (121) pour stabiliser le deuxième raccord (109) sur la deuxième paroi intérieure (111), les premiers éléments de stabilisation (119) et les deuxièmes éléments de stabilisation (121) sont réalisés en particulier sous la forme de nervures de stabilisation et/ou de moulures de stabilisation.

14. Réservoir de liquide (100) selon la revendication 13, dans lequel les premiers éléments de stabilisation (119) et les deuxième éléments de stabilisation (121) sont disposés sur un côté intérieur, tourné vers l'intérieur (106) du réservoir de liquide (100), du raccord respectif (103, 109) ou sur un côté extérieur, tourné vers l'extérieur (122) du réservoir de liquide (100), du raccord respectif (103, 109), et dans lequel les premiers éléments de stabilisation (119) et les deuxièmes éléments de stabilisation (121) s'étendent suivant une direction longitudinale du raccord respectif (103, 109) ou les premiers éléments de stabilisation (119) et les deuxièmes éléments de stabilisation (121) sont disposés en étoile ou en périphérie radiale sur le raccord respectif (103, 109).

15. Réservoir de liquide (100) selon l'une quelconque des revendications précédentes, dans lequel la première demi-coque de réservoir de liquide (102) et le premier raccord (103) sont formés intégralement par une pièce moulée par injection, en particulier une pièce moulée en matière plastique et/ou la deuxième demi-coque de réservoir de liquide (107) et le deuxième raccord (109) sont formés intégralement par une pièce moulée par injection, en particulier une pièce moulée en matière plastique.
